Europäisches Patentamt

European Patent Office

Office européen des brevets

(19)

(11) Veröffentlichungsnummer: **0 219 683**
**B1**

(12) **EUROPÄISCHE PATENTSCHRIFT**

(45) Veröffentlichungstag der Patentschrift:
23.08.89

(21) Anmeldenummer: **86112747.0**

(22) Anmeldetag: **16.09.86**

(51) Int. Cl.⁴: **B60K 17/30**, F16J 15/56,
F16J 15/54

(54) Dichtungsanordnung.

(30) Priorität: 24.09.85 US 779554

(43) Veröffentlichungstag der Anmeldung:
29.04.87 Patentblatt 87/18

(45) Bekanntmachung des Hinweises auf die Patenterteilung:
23.08.89 Patentblatt 89/34

(84) Benannte Vertragsstaaten:
AT BE DE FR GB IT NL SE

(56) Entgegenhaltungen:
CH-A- 85 926
DE-A- 2 839 816

(73) Patentinhaber: DEERE & COMPANY, 1 John Deere Road,
Moline Illinois 61265(US)

(72) Erfinder: Gregerson, Stanley Martin, 3213 Dallas Drive,
Cedar Falls Iowa 50613(US)

(74) Vertreter: Feldmann, Bernhard et al, DEERE &
COMPANY European Office, Patent Department
Steubenstrasse 36-42 Postfach 503,
D-6800 Mannheim 1(DE)

ACTORUM AG

## Beschreibung

Die Erfindung betrifft eine Dichtungsanordnung mit einer Dichtung für rotierende und einer Dichtung für lineare Bewegung.

Es hat sich generell als sehr vorteilhaft herausgestellt, wenn beim Auftreten von linearer und rotierender Bewegung an einem Teil dessen Abdichtung gegenüber der Umgebung von zwei Dichtungen übernommen wird, von denen die eine für die lineare und die andere für die rotierende Bewegung bestimmt ist. Die Verbindung zweier für unterschiedliche Einsatzverhältnisse geschaffener Dichtungen, nämlich für lineare und für rotierende Abdichtung, führt unweigerlich zu Kompromissen, die sich auf die Lebensdauer und die Qualität einer derartigen kombinierten Dichtung auswirken.

Eine bekannte getrennte Dichtungsanordnung (Carraro, Differenziali Sterzanti, N. 103000-2/78) ist derart aufgebaut, daß eine Dichtung für eine lineare Bewegung innerhalb einer hohlen Welle eines Radflansches und eine Dichtung für eine rotierende Bewegung zwischen der Außenseite der Welle und einem Gehäuse vorgesehen sind.

Bei dieser Dichtungsanordnung ist zu erwarten, daß auf der Außenseite der Welle bei längerer Einsatzdauer im Bereich der Dichtung für die rotierende Bewegung Einlaufrillen entstehen, die zur Folge haben, daß zu gegebener Zeit die Welle mit der Radnabe ausgetauscht werden muß, was schon aus finanziellen Gründen nicht wünschenswert ist.

Der Erfindung liegt angesichts dieser bekannten Dichtungsanordnung die Aufgabe zugrunde, unter Beibehaltung der vorteilhaften Dichtfunktion durch die getrennten Dichtungen die nachteiligen Folgen beim Auftreten von Verschleiß zu vermeiden oder zumindest zu vermindern.

Diese Aufgabe ist erfindungsgemäß durch jeden der Patentansprüche 1 bis 4 gelöst worden.

Auf diese Weise kann die Hülse beim Auftreten von Verschleißerscheinungen ausgetauscht werden, wobei der dabei entstehende Kostenaufwand verhältnismäßig gering ist. Gegebenenfalls können die mit einer der Dichtungen in Berührung kommenden Flächen der Hülse entsprechend bearbeitet, z. B. gehärtet, werden, was bei dem aus dem Stand der Technik bekannten Radflansch mit seiner Welle nur bedingt möglich ist, da diese primär Festigkeitsbelastungen standhalten müssen. Bei einer entsprechenden Ausbildung der Hülse können die beiden Dichtungen auch schon vormontiert werden, so daß sich zusätzlich Montagevorteile ergeben.

Eine weitere Aufgabe der Erfindung wird darin gesehen, ein Getriebe, gegebenenfalls ein Radkopfgetriebe, optimal gegenüber der Umgebung abzudichten.

Diese Aufgabe ist erfindungsgemäß durch die Patentansprüche 3 bzw. 4 gelöst worden.

Bei Getrieben und insbesondere bei Radkopfgetrieben, deren Antrieb über eine Gelenkwelle mit einem Universalgelenk eingeleitet wird und deren zugehörige Räder oft widrigsten Bedingungen ausgesetzt sind, ist damit eine einwandfreie Abdichtung auch beim Angreifen von Sand und dergleichen gewährleistet.

Die weiteren Patentansprüche geben konstruktive Einzelheiten an, die günstige Wirkungen der Dichtungsanordnung und deren Einbau erbringen.

Mit dem Merkmal des Patentanspruches 5 kommt der Hülse eine weitere Funktion zu, die sie aufgrund ihrer Länge sehr gut erfüllen kann. Somit kann insbesondere an der Verbindungsstelle zwischen dem An- und dem Abtriebsteil auf separate und kostspielige Lager für den An- und den Abtriebsteil verzichtet werden.

Gemäß der Lehre des Patentanspruches 6 ergibt sich der Vorteil, daß der An- und der Abtriebsteil an den einander zugelegten Endbereichen mit dem gleichen Profil, insbesondere Zahnprofil, gefestigt sein können, die dann über ein im Innern der Hülse vorgesehenes und entsprechend ausgebildetes Profil miteinander verbunden werden. Hieraus resultiert eine Fertigungs- und Montagevereinfachung sowie eine Kostenreduzierung.

Die Verwendung von Gleitlagern für die Hülse gemäß Patentanspruch 7 führt hin zu geringen Baumaßen und geringeren Herstellungskosten. Dabei können die oder das Gleitlager sowohl in der Hülse wie auch um die Hülse herum angeordnet sein und demnach die Hülse selbst wie auch die von ihr aufgenommenen An- und Abtriebsteile bzw. den linear und rotierend beweglichen Teil lagern.

Einen hohen Dichteffekt der Dichtungen selbst erhält man durch die Anwendung der Lehre gemäß Patentanspruch 8.

In der Zeichnung sind nachfolgend näher beschriebene Ausführungsbeispiele der Erfindung dargestellt. Es zeigt:

Figur 1 einen Vertikalschnitt durch ein Radkopfgetriebe mit einer erfindungsgemäßen Dichtungsanordnung,

Figur 2 die obere Hälfte eines Vertikalschnittes durch ein Radkopfgetriebe mit einer zweiten erfindungsgemäßen Dichtungsanordnung und

Figur 3 die obere Hälfte eines Vertikalschnittes durch ein Radkopfgetriebe mit einer dritten erfindungsgemäßen Dichtungsanordnung.

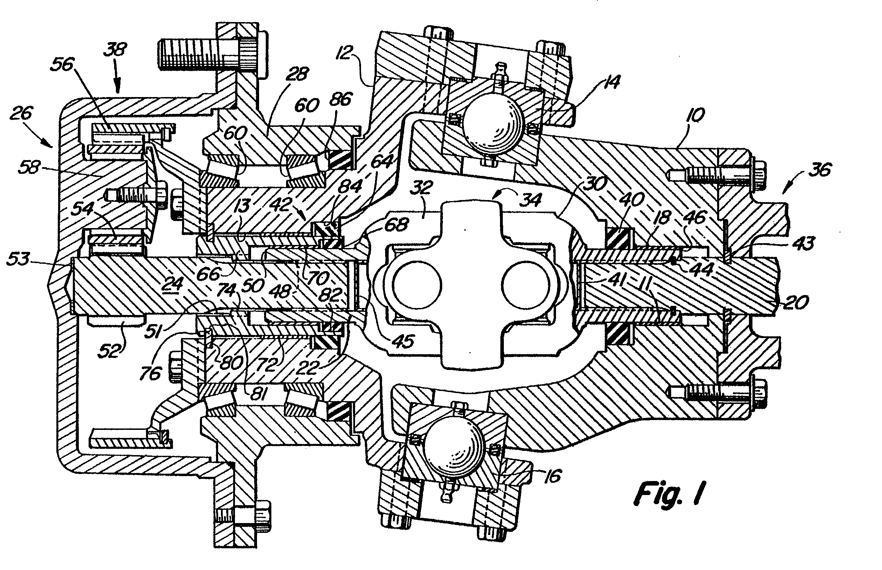

Die Erfindung wird im Zusammenhang mit einem schwenkbaren Antriebszusammenbau einer Achse mit lenkbaren, antreibbaren Rädern beschrieben. Ein schwenkbarer Antriebszusammenbau, wie er in Figur 1 gezeigt ist, enthält einen Gabelkopf 10, der schwenkbar mit einem Gabelgehäuse 12 über ein oberes und ein unteres Achsschenkellager 14 und 16 verbunden ist. Der Gabelkopf 10 und das Gabelgehäuse 12 werden in den Patentansprüchen auch als Aufnahmeteil bezeichnet. Eine hohle Stummelwelle 18 ist innerhalb des Gabelkopfes 10 gelegen und erstreckt sich durch eine Öffnung 11. Anderenends ist die Stummelwelle 18 an eine nicht gezeigte Kraftquelle, etwa einen Motor, über eine Antriebswelle 20 angeschlossen. Eine weitere Stummelwelle 22, die auch einfach als linear und rotierend beweglicher Teil 22 oder als Antriebsteil 22 bezeichnet werden kann, ist in dem Gabelgehäuse 12 angeordnet und erstreckt sich dort durch eine Öffnung 13. Mit der Stummelwelle 22 ist eine Sonnenradwelle 24 verbunden, die Antriebskraft zu einem Getriebe oder Radkopfgetriebe 26 in der Form eines Planetengetriebesystems und schließlich zu einer drehenden Radnabe 28 weiterleitet, wobei die Sonnenradwelle 24 gleichsam einen Abtriebsteil 24 darstellt. Die Stummelwellen 18 und 22 sind jeweils ein Teil eines Universalgelenkes 34, das als Doppelkardanuniversalgelenk ausgebildet ist und mit Bezug auf Figur 1 links und rechts gelegene Gabelenden 32 und 30 enthält. Die Stummelwellen 18 und 22 erstrecken sich nach außen, und zwar von dem rechten und dem linken Gabelende 32 und 30 weg.

Die Stummelwelle 18 ist über eine Verzahnung oder über Paßfedern mit der Antriebswelle 20 verbunden und wird selbst mittels eines Lagers 46 in der Öffnung 11 radial gehalten. Aber auch die Stummelwelle 22 und die Sonnenradwelle 24 sind über eine Vielzahl von Zähnen 48 und 50 miteinander drehfest verbunden, die sich auf der Außenseite der Sonnenradwelle 24 und der Innenseite der Stummelwelle 22 befinden. Diese Verzahnungsverbindung ermöglicht eine lineare Verschiebung der Stummelwelle 22 gegenüber der Sonnenradwelle 24 und umgekehrt, wobei abhängig von der zu übertragenden Kraft die Zähne 48, 50 gegebenenfalls durch eine einfache Paßfederanordnung ersetzt werden können. Ein auf der Sonnenradwelle 24 vorgesehenes Sonnenrad 52 kämmt mit Planetenrädern 54, die abhängig von der Drehung der Sonnenradwelle 24 und deren Zusammenwirken mit einem Ringrad 56 umlaufen, das in bezug auf das Gabelgehäuse 12 festgelegt ist. Die Drehbewegung der Planetenräder 54 wird auf die Radnabe 28 mittels einer Trägerwelle 58 übertragen und bewirkt, daß sich die Radnabe 28 auf Kegelrollenlagern 60 dreht. Die Kegelrollenlager 60 lassen zwar eine rotierende Bewegung, hingegen aber keine lineare, axiale Bewegung der Radnabe 28 in bezug auf das Gabelgehäuse 12 zu. Eine Öldichtung 86, die bestimmt und entwickelt ist, einer rotierenden Bewegung standzuhalten, ist zwischen die Radnabe 28 und das Gabelgehäuse 12 eingesetzt. Die Sonnenradwelle 24 wird durch das Zusammenwirken der Planetenräder 54 an einem in der Zeichnung links gelegenen Endbereich und durch ihren Einsatz in die Stummelwelle 22 an deren rechts gelegenen Endbereich zentriert. Die Führung der Stummelwelle 22 in bezug auf das Gabelgehäuse 12 erfolgt über ein Paar von Gleitlagern 70 und 72, die die Sonnenradwelle 24 bzw. den Umfang der Öffnung 13 des Gabelgehäuses 12 berühren. Anstatt der Gleitlager 70, 72 könnten auch Nadellager oder dergleichen verwendet werden. Sich gegenüberliegende innere und äußere Flächen der Gleitlager 70 und 72 berühren eine Hülse 66, die frei in bzw. um die Gleitlager 70, 72 drehen kann und einen Teil der erfindungsgemäßen Dichtungsanordnung darstellt. Eine axiale Bewegung der Sonnenradwelle 24 in bezug auf das Gabelgehäuse 12 wird durch eine Druckscheibe 53, die nahe des linken Endes der Sonnenradwelle 24 angebracht ist, und einen Anschlag 51 unterbunden, der nahe der Mitte der Sonnenradwelle 24 gelegen ist und bei einer nach rechts gerichteten Bewegung der Sonnenradwelle 24 an einem Satz Zähne 74 in der Hülse 66 anschlägt.

Der Gabelkopf 10 dient als ein Ende eines Gehäuses 36 für die Antriebswelle 20, während das Gabelgehäuse 12 und die Radnabe 28 als Gehäuse 38 für die Stummelwelle 22, die Sonnenradwelle 24 und das Radkopfgetriebe 26 dienen. Das Innere des Gehäuses 36 und des Gehäuses 38 enthält Schmiermittel für die darin enthaltenen Teile, und die Gehäuse 36, 38 stellen eine Abschirmung dar zum Trennen der Schmiermittelumgebung innerhalb der Gehäuse 36 und 38 von der staubangereicherten Umgebung, die oft außerhalb dieser Gehäuse 36, 38 besteht.

Das Vermischen dieser beiden Umgebungen oder der Verlust von Schmiermittel und der Eintritt von Staub und Schmutz in das Gehäuse 36 durch die Öffnung 11 wird durch eine Dichtung 40, die um die Außenseite der Stummelwelle 18 angeordnet ist, und durch einen Enddeckel 41 am linken Ende des hohlen Inneren des Gabelendes 30 verhindert. Die Antriebswelle 20 wird von einer axial gerichteten Bewegung in bezug auf das Gehäuse 36 durch eine Druckscheibe 43 abgehalten, die in sich gegenüberliegende Nuten in dem Gehäuse 36 und in der Antriebswelle 20 eingesetzt ist. Eine Relativbewegung zwischen der Stummelwelle 18 und der Antriebswelle 20 wird durch einen Haltering 44 verhindert, der die Stummelwelle 18 und die Antriebswelle 20 miteinander verbindet. Da die Stummelwelle 18 von einer Axialbewegung abgehalten wird, unterliegt die Dichtung 40 nur einer rotierenden Relativbewegung.

Die Öffnung 13 in dem Gehäuse 38 für die Stummelwelle 22 ist ebenfalls abgedichtet. Jedoch erfährt die Stummelwelle 22 anders als die Stummelwelle 18 aufgrund des vorhandenen Universalgelenkes 34 und des axialen Festhaltens der Stummelwelle 18 sowohl eine lineare wie auch eine rotierende Bewegung. Aus der Möglichkeit einer axialen Bewegung der Stummelwelle 22 gegenüber der Sonnenradwelle 24 entlang der Zähne 48 und 50 erwächst auch die Notwendigkeit einer zusätzlichen Schmierung und des Fernhaltens von Schmutz- oder Schadstoffen von diesem Bereich. Das hohle Innere der Stummelwelle 22 dient daher als ein axialer Durchlaß zum Zuführen von Schmiermittel zu den Zähnen 48, 50 und ist an seinem rechts gelegenen Endbereich durch eine Verschlußkappe 45 abgedichtet. Außerdem ist zur Anpassung an die zweifache Bewegung der Stummelwelle 22 eine mit 42 bezeichnete erfindungsgemäße Dichtungsanordnung 42 um die Stummelwelle 22 herum angeordnet.

Die Dichtungsanordnung 42 besteht aus einer Dichtung 64 für eine rotierende Bewegung, der Hülse 66 und einer Dichtung 68 für eine lineare oder axiale Bewegung. Die an der Innenfläche der Hülse 66 angeordneten Zähne 74 greifen in die Zähne 50 der Sonnenradwelle 24 ein und bringen daher die Drehbewegung zwischen der Hülse 66 und der Stummelwelle 22 in Übereinstimmung, d. h. sie sind drehfest miteinander verbunden. Eine Axialbewegung der Hülse 66 mit Bezug auf das Gabelgehäuse 12 wird wiederum durch eine Druckscheibe 76 unterbunden. Diese Druckscheibe 76 wirkt als Verbindungsfeder, die die Öffnung zwischen dem Gabelgehäuse 12 und der Hülse 66 überbrückt und in einer Nut 80 in dem Gabelgehäuse 12 gehalten ist. Eine auf der Hülse 66 vorgesehene Ringnut 81 nimmt die Druckscheibe 76 in sich auf und läßt eine freie rotierende Bewegung der Hülse 66 gegenüber der Druckscheibe 76 zu. An ihrem ganz rechts gelegenen Endbereich weist die Hülse 66 eine ringförmige Ausnehmung 82 auf ihrer Innenseite auf, in die die Dichtung 68 für die lineare Bewegung eingesetzt ist. Die Dichtung 68 ist geschaffen für eine relative lineare Bewegung der Hülse 66 gegenüber der Stummelwelle 22. Da die Dichtung 68 in der Ausnehmung 82 unbeweglich gehalten wird, bewegt sich die Stummelwelle 22 axial, also mit Bezug auf die Hülse 66 und die Dichtung 68. Radial nach außen von der Dichtung 68 gesehen, weist das Gabelgehäuse 12 eine weitere Ausnehmung 84 auf, in der die Dichtung 64 für die rotierende Bewegung gehalten ist. Die Dichtung 64 ist speziell ausgebildet für eine relative rotierende Bewegung der Außenfläche der Hülse 66 in bezug auf die Innenfläche der Dichtung 64.

Die Hauptanforderungen der in Figur 1 vereinfacht in Blockform gezeigten Dichtungen 64 und 68 sind, daß die Dichtung 64 einer rotierenden Bewegung standhalten kann, während die Dichtung 68 gegen eine lineare Bewegung bestehen kann, wobei beide Dichtungen 64, 68 zum Abgrenzen der inneren zu der äußeren Umgebung geeignet sind. Es gibt hierzu eine Vielzahl von brauchbaren Dichtungen, und es gibt auch viele Dichtungsvarianten, die zwischen die Öffnung 13 des Gabelgehäuses 12 und die Hülse 66 bzw. zwischen die Hülse 66 und die Stummelwelle 22 eingesetzt werden können. Jedoch könnte die Dichtung 68 für die lineare Bewegung auch durch eine Membran oder einen Faltenbalg ersetzt werden. Für dieses Ausführungsbeispiel wird davon ausgegangen, daß beide Dichtungen 64 und 68 aus einem harten, strammen Gummimaterial hergestellt sind, wobei die Härte des Gummimaterials für die Dichtung 64 für die rotierende Bewegung normalerweise im Bereich von 80 Härtegraden liegt. Die Dichtung 68 für die lineare Bewegung kann ebenfalls aus einem Gummimaterial hergestellt sein, das die gleiche oder annähernd die gleiche Härte wie die Dichtung 64 für die rotierende Bewegung aufweist. Jedoch mag es wünschenswert sein, in Situationen mit einem großen Abrieb die Härte der Dichtung 68 für die lineare Bewegung auf ungefähr 90 Härtegrade zu erhöhen, was zu einer Erhöhung der Steifigkeit und Abriebsfestigkeit gegenüber der Dichtung 64 für die rotierende Bewegung führen würde. Obwohl beide Dichtungen 64, 68 aus Material mit der gleichen Steifigkeit und/oder der gleichen Härte hergestellt sein können, bestimmt sich die Gesamtfestigkeit bzw. die Gesamthärte nach der Dicke der Dichtungen 64, 68. Typischerweise wird die Dichtung 64 für die rotierende Bewegung einen dünnen Querschnitt mit einem hohen Maß an Einwirkung ihrer nicht gezeigten Dichtlippe auf die Hülse 66 haben, aber sie wird nur eine geringe Druckkraft mit der Dichtlippe auf die Hülse 66 ausüben, so daß die Dichtung 64 relativ nachgiebig ist. Im Gegensatz hierzu wird die Dichtung 68 für die lineare Bewegung viel dicker sein und bei möglicherweise geringerer Einwirkung oder Druck, der von der Dichtlippe ausgeht, gegenüber der Dichtung 64 für die rotierende Bewegung eine größere gesamte Anpreßkraft mit der Dichtlippe auf die Stummelwelle 22 ausüben, um die erforderliche Abreibwirkung entlang der Außenfläche der Stummelwelle 22 auszuüben.

Während des Einsatzes werden nach der Erfindung zwei unterschiedliche Dichtungen 64, 68 benutzt, die voneinander unabhängig eine andere Dichtungsfunktion erfüllen. Mit Blick auf die Funktion des schwenkbaren Antriebszusammenbaues und die Funktion seiner Dichtungen 40, 64, 68 erkennt man, daß die durch eine nicht gezeigte Antriebsmaschine angetriebene Antriebswelle 20 Antriebskraft über das Universalgelenk 34, die Stummelwellen 18, 22, die Sonnenradwelle 24, das Radkopfgetriebe 26, das Gehäuse 38 und schließlich auf ein nicht gezeigtes Antriebsrad überträgt. Wenn die Antriebswelle 20 und die Stummelwelle 22 axial fluchten, d. h. wenn keine Schwenkbewegung in dem schwenkbaren Antriebszusammenbau stattgefunden hat, dann überträgt die Antriebswelle 20 im wesentlichen eine rein rotierende Bewegung auf die Stummelwelle 22 über das Universalgelenk 34. Unter diesen Bedingungen bleibt die relative Beziehung der Stummelwelle 22 zu der Sonnenradwelle 24 und der Hülse 66 unverändert. Die einzige relative Bewegung in der Dichtungsanordnung 42 findet daher zwischen der Dichtung 64 für die rotierende Bewegung, die fest in dem Gabelgehäuse 12 angeordnet ist, und der Außenfläche der Hülse 66 statt, die gemeinsam mit der Sonnenradwelle 24 dreht. Wenn das Gabelgehäuse 12 mit Bezug auf den Gabelkopf 10 geschwenkt wird, dann bedingt die Winkelbewegung des Universalgelenkes 34, daß sich die Stummelwelle 22 weiter in das Gabelgehäuse 12 hinein erstreckt. Der Haltering 44 und die Druckscheibe 43 verhindern eine axiale Bewegung der Stummelwelle 18, so daß eine Änderung der axialen Länge, bedingt durch die Winkelbewegung des Universalgelenkes 34, lediglich auf die Stummelwelle 22 übertragen wird. Wenn sich die Stummelwelle 22 aus der Öffnung 13 heraus oder in diese hinein bewegt, bleiben die Hülse 66 und die Sonnenradwelle 24 axial dennoch fest mit Bezug auf das Gabelgehäuse 12, weshalb sich nur die Stummelwelle 22 einer axialen Bewegung unterworfen sieht, die durch das Universalgelenk 34 eingebracht wird. Die Dichtung 68 für die lineare Bewegung dreht bereits aufgrund ihrer Festlegung in der Hülse 66 gemeinsam mit der Stummelwelle 22, weshalb die Dichtung 68 nur einer relativen Gleitbewegung zwischen ihrer Innenfläche und der Außenfläche der Stummelwelle 22 unterliegt. Demgemäß dient die Hülse 66 dazu, die rotierende und die lineare Bewegung der Stummelwelle 22 zu trennen, so daß jede Dichtung 64, 68 in der Dichtungsanordnung 42 nur der Art von Relativbewegung unterworfen wird, für die sie geschaffen ist.

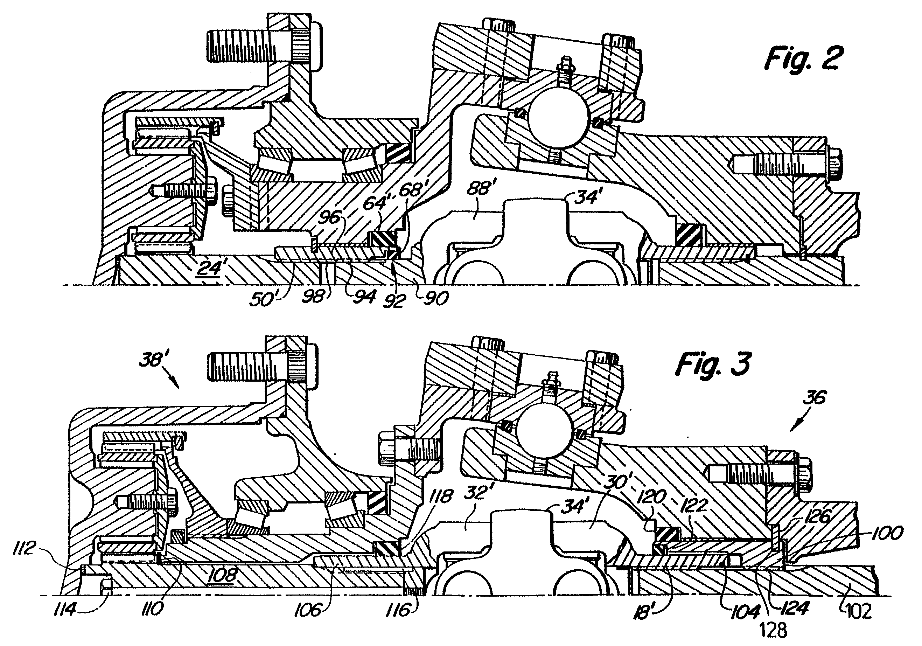

Figur 2 zeigt einen ähnlichen, jedoch geringfügig geänderten schwenkbaren Antriebszusammenbau mit einer zweiten erfindungsgemäßen Dichtungsanordnung. Die Dichtungen 64' und 68', die in dieser Figur 2 dargestellt sind, funktionieren in gleicher Weise wie die im Zusammenhang mit Figur 1 beschriebenen. Jedoch weist das linke Ende des Universalgelenkes 34' eine Gabel 88' auf, die in eine volle Stummelwelle 90 übergeht. Diese volle Stummelwelle 90 ist mit einer Anzahl von Zähnen 94 versehen, die mit einer anderen dazu passenden Anzahl von Zähnen 98 an der Innenfläche einer Hülse 96 in Eingriff stehen. Rechts von den Zähnen 94 enthält die Stummelwelle 90 einen kreisförmigen Querschnittsbereich, der Kontakt hat zu der Innenfläche der Dichtung 68'. In diesem Ausführungsbeispiel wird die eigentliche Kraft von der Stummelwelle 90 auf die Hülse 96 und von dieser auf die Sonnenradwelle 24' über die Zähne 98 und 50' übertragen. Die Stummelwelle 90 dreht daher die Hülse 96 mit der gleichen rotierenden Bewegung, während die Hülse 96 als Verbindung wirkt, um die Kraft von der Stummelwelle 90 auf die Sonnenradwelle 24' zu übertragen. Abgesehen von den Änderungen an der Hülse 96, der Stummelwelle 90 und der Sonnenradwelle 24' funktioniert der Antriebszusammenbau nach Figur 2 im wesentlichen wie der in Figur 1 gezeigte.

In Figur 3 ist nochmals eine weitere Art eines Antriebszusammenbaues mit einer dritten erfindungsgemäßen Dichtungsanordnung gezeigt, der sich von den in Figur 2 und Figur 1 gezeigten dadurch unterscheidet, daß die Dichtungsanordnung in dem Gabelkopf 10 des Antriebszusammenbaues untergebracht ist. In diesem Ausführungsbeispiel ist das Gabelende 30' des Universalgelenkes 34' wiederum mit der hohlen Stummelwelle 18' verbunden, die mit einer Welle 102 zum Antrieb verzahnt ist. Im linksseitigen Endbereich des Universalgelenkes 34' ist das Gabelende 32' ebenfalls wieder mit einer hohlen Stummelwelle 106 versehen, die mit einer Sonnenradwelle 108 verzahnt ist. Eine lineare oder axiale Relativbewegung der Sonnenradwelle 108 in bezug auf das Gabelgehäuse 12 und das Gehäuse 38' wird durch Druckscheiben 110 und 112 verhindert, die in Berührung mit dem Gabelgehäuse 12 bzw. dem Gehäuse 38' kommen. Durch die Sonnenradwelle 108 erstreckt sich koaxial eine Schraube 114, die in eine Öffnung 116 in dem Gabelende 32' eingeschraubt ist. Nachdem die Schraube 114 angezogen ist, verhindert sie jegliche Axialbewegung zwischen der Stummelwelle 106 und der Sonnenradwelle 108. Nachdem das in dem Gabelgehäuse 12 gelegene Ende des Universalgelenkes 34' von einer axialen, linearen Bewegung abgehalten wird, findet jede zuvor beschriebene hin- und hergehende, also lineare Bewegung nun an dem gabelkopfseitigen Ende des Universalgelenkes 34' statt. Dementsprechend bewegt sich nun die Stummelwelle 18' axial mit Bezug auf die Welle 102. Daher hat die Stummelwelle 106 eine Dichtung 118, die für eine rotierende Bewegung geschaffen ist und die das Innere des Gehäuses 38' mit dem Radkopfgetriebe 26 insbesondere gegen den Aus tritt von Öl abdichtet, während die erfindungsgemäße Dichtungsanordnung nun um die Stummelwelle 18' herum angeordnet ist. Die um die Stummelwelle 18' herum angeordnete Dichtungsanordnung besteht aus einer Dichtung 120 für rotierende Bewegung, einer Hülse 100 und einer Dichtung 122 für lineare, axiale Bewegung und funktioniert im wesentlichen in der gleichen Weise wie die zuvor beschriebenen. Die gemeinsame Bewegung der Hülse 100 mit der Stummelwelle 18' wird durch eine Vielzahl von Zähnen 124 auf der Innenseite der Hülse 100 hervorgerufen, die mit einer Vielzahl von Zähnen 104 auf der Außenfläche der Welle 102 in Eingriff stehen. Die Hülse 100 wird von einer linearen, axialen Bewegung mittels einer Druckscheibe 126 abgehalten, die an dem Gabelkopf 10 befestigt ist und sich in eine Ringnut 128 erstreckt, die genügend Spiel aufweist, um eine rotierende Bewegung der Hülse 100 gegenüber der Druckscheibe 126 zuzulassen.

## Patentansprüche

1. Dichtungsanordnung für einen einer rotierenden und einer linearen Bewegung unterliegenden Teil (22, 90, 18'), wobei für die lineare Bewegung und für die rotierende Bewegung jeweils eine separate Dichtung (64, 64', 68, 68', 120, 122) vorgesehen ist, dadurch gekennzeichnet, daß die Dichtungen (64, 64', 68, 68', 120, 122) durch eine auswechselbare Hülse (66, 96, 100) getrennt sind, die gegenüber dem Teil (22, 90, 18') linear verschiebbar ist und gegenüber einem relativ feststehenden Aufnahmeteil (10, 12) rotierend beweglich ist.

2. Dichtungsanordnung für einen einer rotierenden und einer linearen Bewegung unterliegenden Teil (22, 90, 18'), wobei für die lineare Bewegung und für die rotierende Bewegung jeweils eine separate Dichtung (64, 64', 68, 68', 120, 122) vorgesehen ist, dadurch gekennzeichnet, daß die Dichtungen (64, 64', 68, 68', 120, 122) durch eine auswechselbare Hülse (66, 96, 100) getrennt sind, die gegenüber dem Teil (22, 90, 18') drehbeweglich und gegenüber einem relativ feststehenden Aufnahmeteil (10, 12) linear beweglich ist.

3. Dichtungsanordnung für eine einer rotierenden und einer linearen Bewegung unterliegende Welle (22, 90, 18') eines in einem Gehäuse (38, 38') angeordneten Getriebes (26), dadurch gekennzeichnet, daß die Welle (22, 90, 18') einen Antriebsteil (22, 90, 102) und einen Abtriebsteil (24, 24', 18') enthält, die drehfest miteinander verbunden sind und von denen mindestens einer drehfest mit einer Hülse (66, 96, 100) verbunden ist, wobei zwischen der Hülse (66, 96, 100) und dem Antriebsteil (22, 90, 102) eine Dichtung (68, 68', 122) für lineare Bewegung und zwischen der Hülse (66, 96, 100) und einem Aufnahmeteil (12) eine Dichtung (64, 64', 120) für rotierende Bewegung vorgesehen ist.

4. Dichtungsanordnung für ein in einem relativ feststehenden Gehäuse (38, 36) angeordnetes Radkopfgetriebe (26) eines antreibbaren, lenkbaren Rades eines Kraftfahrzeuges, insbesondere eines Ackerschleppers, mit einem Universalgelenk (34), dadurch gekennzeichnet, daß das Universalgelenk (34) abtriebsseitig einen in das Gehäuse (38, 38') hineinführenden Antriebsteil (22, 90) und einen in dem Gehäuse (38) gelegenen Abtriebsteil (24, 24') aufweist, die miteinander drehfest, jedoch zueinander axial verschieblich verbunden sind und von denen mindestens einer drehfest mit einer Hülse (66, 96) verbunden ist, und daß zwischen der Hülse (66, 96) und dem Antriebsteil (22, 90) eine Dichtung (68, 68') für eine lineare Bewegung und zwischen der Hülse (66, 96) und einem Aufnahmeteil (12) eine Dichtung (64, 64') für eine rotierende Bewegung vorgesehen ist.

5. Dichtungsanordnung nach Anspruch 3 oder 4, dadurch gekennzeichnet, daß der An- und/oder der Abtriebsteil (24, 24') in der Hülse (66, 96) axial und radial geführt ist.

6. Dichtungsanordnung nach Anspruch 3 oder 4, dadurch gekennzeichnet, daß der Antriebsteil (90) und der Abtriebsteil (24') über die Hülse (96) drehfest miteinander verbunden sind.

7. Dichtungsanordnung nach einem oder mehreren der vorherigen Ansprüche, dadurch gekennzeichnet, daß die Hülse (66, 96, 100) mittels Gleitlagern (70, 72) gelagert ist.

8. Dichtungsanordnung nach einem oder mehreren der vorherigen Ansprüche, dadurch gekennzeichnet, daß die Dichtung (64, 64', 120) für rotierende Bewegung eine relativ geringe Flächenpressung und die Dichtung (68, 68', 122) für lineare Bewegung eine reiativ hohe Flächenpressung aufweist.

**Claims**

1. Sealing device for a part (22, 90, 18') subject to a rotational and a linear movement, wherein a separate seal (64, 64', 68, 68', 120, 122) is provided for each of the linear movement and the rotating movement, characterized in that the seals (64, 64', 68, 68', 120, 122) are separated by an interchangeable sleeve (66, 96, 100), which is linearly displaceable relative to the part (22, 90, 18') and is rotationally movable relative to a relatively fixed receiving part (10, 12).

2. Sealing device for a part (22, 90, 18') subject to a rotational and a linear movement, wherein a separate seal (64, 64', 68, 68', 120, 122) is provided for each of the linear movement and the rotating movement, characterized in that the seals (64, 64', 68, 68', 120, 122) are separated by an interchangeable sleeve (66, 96, 100), which is rotationally movable relative to the part (22, 90, 18') and is linearly movable relative to a relatively fixed receiving part (10, 12).

3. Sealing device for a shaft (22, 90, 18') subject to a rotational and a linear movement, of a gear (26) arranged in a housing (38, 38'), characterized in that the shaft (22, 90, 18') comprises a drive part (22, 90, 102) and a driven part (24, 24', 18'), which are connected together rotationally fast and of which at least one is connected rotationally fast to a sleeve (66, 96, 100), wherein a seal (68, 68', 122) for linear movement is provided between the sleeve (66, 96, 100) and the drive part (22, 90, 102) and a seal (64, 64', 120) for rotational movement is provided between the sleeve (66, 96, 100) and a receiving part (12).

4. Sealing device for a wheel gear (26) of a driven, steerable wheel of a motor vehicle, especially an agricultural tractor, arranged in a relatively stationary housing (38, 36), with an universal joint (34), characterized in that the universal joint (34) comprises on the driven side a drive part (22, 90) extending into the housing (38, 38') and a driven part (24, 24') mounted in the housing (38), which are connected together rotationally fast but axially displaceable relative to one another and of which at least one is connected rotationally fast to a sleeve (66, 96), and in that a seal (68, 68') for linear movement is provided between the sleeve (66, 96) and the drive part (22, 90) and a seal (64, 64') for rotational movement is provided between the sleeve (66, 96) and a receiving part (12).

5. Sealing device according to claim 3 or 4, characterized in that the drive and/or driven part (24, 24') is guided axially and radially in the sleeve (96).

6. Sealing device according to claim 3 or 4, characterized in that the drive part (90) and the driven part (24') are connected together rotationally fast through the sleeve (96).

7. Sealing device according to one or more of the preceding claims, characterized in that the sleeve (66, 96, 100) is journalled by means of sliding bearings (70, 72).

8. Sealing device according to one or more of the preceding claims, characterized in that the seal (64, 64', 120) for rotational movement has a relatively small surface pressure and the seal (68, 68', 122) for linear movement has a relatively high surface pressure.

**Revendications**

1. Ensemble d'étanchéité pour une pièce (22, 90, 18') rotative et mobile linéairement, un joint séparé (64, 64', 68, 68', 120, 122) étant prévu respectivement pour le mouvement linéaire et pour le mouvement de rotation, caractérisé en ce que les joints (64, 64', 68, 68', 120, 122) sont séparés par un manchon amovible (66, 96, 100) qui peut être déplacé linéairement par rapport à la pièce (22, 90, 18') et est mobile en rotation par rapport à une pièce de réception de position relative fixe (10, 12).

2. Ensemble d'étanchéité pour une pièce (22, 90, 18') rotative et mobile linéairement, un joint séparé (64, 64', 68, 68', 120, 122) étant prévu respectivement pour le mouvement linéaire et le mouvement de rotation, caractérisé en ce que les joints (64, 64', 68, 68', 120, 122) sont séparés par un manchon amovible (66, 96, 100) qui est mobile en rotation par rapport à la pièce (22, 90, 18') et est mobile linéairement par rapport à une pièce de réception de position relative fixe (10, 12).

3. Ensemble d'étanchéité pour un arbre rotatif et mobile linéairement (22, 90, 18') d'une transmission (26) placée dans un carter (38, 38'), caractérisé en ce que l'arbre (22, 90, 18') comprend une section primaire (22, 90, 102) et une section secondaire (24, 24', 18) qui sont solidarisées en rotation et dont l'une au moins est solidaire en rotation d'un manchon (66, 96, 100), un joint (68, 68', 122) pour le mouvemente linéaire étant prévu entre le manchon (66, 96, 100) et la section primaire (22, 90, 102) et un joint (64, 64', 120) pour le mouvement de rotation étant prévu entre le manchon (66, 96, 100) et une pièce de réception (12).

4. Ensemble d'étanchéité pour une transmission à engrenage planétaire (26) placée dans un carter (38, 36) de position relative fixe d'une roue directrice motrice d'un véhicule automobile, notamment d'un tracteur agricole, comportant un joint articulé (34), caractérisé en ce que le joint articulé (34) comporte côté secondaire une section primaire (22, 90) pénétrant dans le carter (38, 38') et une section secondaire (24, 24') placée dans le carter (38), lesquelles sont solidarisées en rotation mais mobiles axialement l'une par rapport à l'autre et dont l'une au moins est solidaire en rotation d'un manchon (66, 96), et en ce qu'on prévoit entre le manchon (66, 96) et la section primaire (22, 90) un joint (68, 68') pour un mouvement linéaire et, entre le manchon (66, 96) et une pièce de réception (12), un joint (64, 64') pour un mouvement de rotation.

5. Ensemble d'étanchéité suivant la revendication 3 ou 4, caractérisé en ce que la section primaire et/ou la section secondaire (24, 24') est guidée axialement et radialement dans le manchon (66, 96).

6. Ensemble d'étanchéité suivant la revendication 3 ou 4, caractérisé en ce que la section primaire (90) et la section secondaire (24') sont solidarisées en rotation par l'intermédiaire du manchon (96).

7. Ensemble d'étanchéité suivant une ou plusieurs des revendications précédentes, caractérisé en ce que le manchon (66, 96, 100) est monté au moyen de paliers lisses (70, 72).

8. Ensemble d'étanchéité suivant une ou plusieurs des revendications précédentes, caractérisé en ce que le joint (64, 64', 120) pour le mouvement de rotation présente une pression superficielle relativement faible et le joint (68, 68', 122) pour le mouvement linéaire une pression superficielle relativement élevée.

*Fig. I*

Fig. 2

Fig. 3